# EUROPÄISCHE PATENTANMELDUNG

(11) **EP 2 797 343 A1**
(43) Veröffentlichungstag der Anmeldung: **29.10.2014**
(21) Anmeldenummer: 13198536.8
(22) Anmeldetag: 19.12.2013
(51) Int. Cl.: H04R 25/00, G02C 11/06

(54) **Verfahren zum Verbinden eines Hörgerätteils mit einem Adapter und Hörgerätvorrichtung**

(30) Priorität: 24.04.2013 AT 1362013 U
(71) Anmelder: BHM-Tech Produktionsgesellschaft m.b.H., 7423 Grafenschachen (AT)
(72) Erfinder: Berl, Franz, 2154 Unterstinkenbrunn (AT); Bischof, Marc-Rene, 7412 Wolfau (AT)
(74) Vertreter: KLIMENT & HENHAPEL

(57) **Zusammenfassung**

Verfahren zum Verbinden eines Hörgerätteils (1) mit einer darin befindlichen Hörgerätöffnung (2) mit einem Adapter (4), welcher eine Adapteröffnung (5) zur Befestigung des Adapters (4) an einer Brille aufweist, bei welchem Verfahren zumindest der Teil des Hörgerätteils (1) mit der darin befindlichen Hörgerätöffnung (2) über zumindest einen Teil des Adapters (4) geschoben wird, wobei das Hörgerätteil (1) eine quer auf eine Längsachse der Hörgerätöffnung (2) stehende Bohrung (3) aufweist und nach dem Überschieben des Hörgerätteils (1) über den Adapter (4) und eine daran vorgesehene Kerbe (6), ein Sicherungsstift (7) in die Bohrung (3) und die Kerbe (6) eingebracht wird.

## Beschreibung

### GEBIET DER ERFINDUNG

Die vorliegende Erfindung bezieht sich auf ein Verfahren zum Verbinden eines Hörgerätteils mit einer darin befindlichen Hörgerätöffnung mit einem Adapter, welcher eine Adapteröffnung zur Befestigung des Adapters an einer Brille aufweist, bei welchem Verfahren zumindest der Teil des Hörgerätteils mit der darin befindlichen Hörgerätöffnung über zumindest einen Teil des Adapters geschoben wird, gemäß dem Oberbegriff des Anspruchs 1.

### STAND DER TECHNIK

Menschen mit einer Hörbehinderung haben oft den Wunsch, ein Hörgerät zu tragen, durch welches die Hörschwäche behoben oder teilweise ausgeglichen wird. Dabei besteht oftmals der Wunsch, dass das Hörgerät nicht so leicht oder gar nicht sichtbar ist.

Da viele Menschen eine Brille tragen liegt es nahe, Hörgeräte an diesen Brillen zu befestigen oder sie in die Brille zu integrieren.

Auf dem Markt gibt es Brillen, die ein Hörgerät bereits integriert haben. Da diese oft klobig wirken oder aus persönlichen, oft ästhetischen, Gründen Kunden ein Hörgerät auf eine andere Brille montiert haben wollen, gibt es Verfahren zur Anbindung eines Hörgeräts an eine Brille beziehungsweise Hörgeräte, die an Brillen befestigt werden können.

In der EP1967893B1 wird ein Knochenleitungsmodul zum Aufsetzen auf eine Brille, eine Knochenleitungshörgerät-Brille mit einem derartigen Modul und ein Verfahren zu ihrer Herstellung beschrieben. Dabei wird ein innerer Draht eines Bügels der Brille an oder in einen Teil der Knochenleitungshörgerät-Brille geklebt, eingehängt oder gelötet. Nachteilig dabei ist, dass die Verbindung nicht einfach zu erzielen ist. Auch die Flexibilität im Lösungsfinden bei verschiedenen Bügelformen ist nicht gegeben. Daher ist es aufwendig, für verschiedene Brillen eine Lösung zu finden.

Des Weiteren ist es nachteilig, dass die Hörgeräte oft nicht stabil auf den Brillen befestigt werden können und die Hörgeräte leicht als solche wahrgenommen werden können.

Brillen, die das Hörgerät bereits integriert haben, haben den Nachteil, dass die Auswahl an Brillen sehr eingeschränkt ist und des Weiteren die Brillen relativ dick ausgeführte Brillenbügel und Brillenrahmen haben.

Bei der Anbindung von Hörgeräten an Brillen ergibt sich bei den auf dem Markt vorhandenen Lösungen das Problem, dass die Hörgeräte nicht so gut an die verschiedensten Brillen angepasst sind und auch nicht so leicht angepasst werden können, da das Ändern aufwendig ist.

### AUFGABE DER ERFINDUNG

Der Erfindung liegt die Aufgabe zugrunde, ein Verfahren zum Verbinden eines Hörgeräts mit einer Brille und eine diesbezügliche Vorrichtung bereitzustellen, damit als Ergebnis die Verbindung einfach und stabil ist.

Eine weitere Aufgabe ist, dass die Anbindung flexibel ist, sodass leicht auf unterschiedliche Brillenlösungen eingegangen werden kann, ohne ein neues Hörgerät entwickeln zu müssen.

Des Weiteren soll der Wechsel des Hörgeräts von einer Brille auf eine andere Brille leicht und kostengünstig möglich sein.

### DARSTELLUNG DER ERFINDUNG

Diese Aufgaben werden bei dem Verfahren zum Verbinden eines Hörgerätteils mit einer darin befindlichen Hörgerätöffnung mit einem Adapter, welcher eine Adapteröffnung zur Befestigung des Adapters an einer Brille aufweist, bei welchem Verfahren zumindest der Teil des Hörgerätteils mit der darin befindlichen Hörgerätöffnung über zumindest einen Teil des Adapters geschoben wird, dadurch gelöst, dass das Hörgerätteil eine quer auf eine Längsachse der Hörgerätöffnung stehende Bohrung aufweist und nach dem Überschieben des Hörgerätteils über den Adapter und eine daran vorgesehene Kerbe, ein Sicherungsstift in die Bohrung und die Kerbe eingebracht wird.

Dadurch, dass der Hörgerätteil lediglich mit einem Stift gesichert ist, kann diese Verbindung von jedem nachträglich wieder gelöst werden. Dies bietet den Vorteil, dass der Kunde selbst das Hörgerät zwischen verschiedenen Brillen wechseln kann und lediglich der Adapter auf jeder Brille vorhanden sein muss.

Ein derart durchgeführtes Verfahren bietet eine Lösung, welche als Ergebnis eine stabile und einfache Verbindung eines Hörgerätteils mit einer Brille ermöglicht.

Dabei ist das Hörgerätteil ein Teil, der zu einem Hörgerät gehört. In diesem Fall ist das Hörgerät mehrteilig ausgeführt. Es ist aber auch möglich, dass das Hörgerät einteilig ausgeführt ist, in diesem Fall ist der Hörgerätteil das Hörgerät selbst.

Gemäß einer weiteren bevorzugten Ausführungsvariante des erfindungsgemäßen Verfahrens wird zumindest ein Teil eines Brillenbügels einer Brille in die Adapteröffnung eingebracht. Dadurch kann eine formschlüssige Verbindung des Hörgerätteils mit der Brille hergestellt werden.

In einer weiteren bevorzugten Ausführungsvariante wird der Adapter aus mehreren unterschiedlichen Adaptern, welche von einer gemeinsamen Adapterhaltevorrichtung gehalten werden, passend zu dem Hörgerätteil und/oder zum Brillenbügel ausgewählt. Dies bietet in der Praxis ein einfaches Verfahren, bei dem schnell die richtige Lösung für verschiedene Brillen gefunden werden kann. Des Weiteren ist es dadurch leicht und kostengünstig möglich, von einer Brille auf eine andere Brille zu wechseln, ohne gleich ein neues Hörgerät kaufen zu müssen.

Eine besonders bevorzugte Ausführungsvariante beinhaltet, dass die Adapterhaltevorrichtung mit den Adaptern ein Gussformteil mit Sollbruchstellen zum Ablösen der Adapter umfasst. Dadurch können die Adapter kostengünstig hergestellt werden.

Eine weitere besonders bevorzugte Ausführungsvariante der Erfindung ist, dass der Brillenbügel abgeschnitten, die Kontur des Brillenbügels angepasst und der Adapter auf den angepassten Brillenbügel aufgeschoben wird. Dies geschieht beispielsweise durch Vorbereiten des abgeschnittenen Brillenbügels für die Adapteröffnung durch Zurechtschneiden und/oder Feilen und findet etwa bei reinen Metallbügeln Anwendung. Durch das Anpassen der Kontur des Brillenbügels, indem der abgeschnittene Brillenbügel auf die Innenabmessungen der Adapteröffnung durch Zurechtschneiden und/oder Feilen gebracht wird, wird eine gute Verbindung zwischen Brillenbügel und Adapter garantiert. Diese Verbindung soll ja möglichst stabil und langlebig sein.

Eine andere bevorzugte Ausführungsvariante zeichnet sich dadurch aus, dass der Brillenbügel einen inneren Draht und eine äußere Ummantelung umfasst und der Brillenbügel abgeschnitten, ein Teil der Ummantelung entfernt und der Adapter auf den Draht aufgeschoben wird. Diese Ausführungsvariante findet zum Beispiel bei mit Kunststoff ummantelten Drahtbügeln Anwendung. Durch die Abmantelung kann eine stabile Verbindung zwischen Hörgerätteil und Brille hergestellt werden, da der Draht den stabilen Kern des Brillenbügels ausmacht.

Bevorzugt ist bei dem vorliegenden erfindungsgemäßen Verfahren, dass der Hörgerätteil ein formbares Bügelende, zum Beispiel einen Ohrhaken, bildet und es folgende zusätzliche Schritte vor dem Abschneiden des Brillenbügels umfasst: Die Brille wird von einem Brillenträger aufgesetzt, eine Schablone, welche zumindest mit einem Schlitz versehen ist, wird an einem Teil eines Ohrs des Brillenträgers angebracht und der Brillenbügel wird an der Stelle des zumindest einen Schlitzes und/oder einem Endbereich der Schablone für das Abmanteln und/oder Abschneiden markiert. Dadurch wird ein standardisiertes Verfahren bereitgestellt, bei dem die Anpassung an den jeweiligen Brillenträger und die Brille einfach vorzunehmen ist.

Eine weitere bevorzugte Ausführungsvariante ist, dass der Adapter eine Anschlaglippe aufweist, welche den Eingang der Adapteröffnung umrandet, und das Hörgerätteil über den Adapter übergeschoben wird bis zum Anschlag an der Anschlaglippe. Durch diese Anschlaglippe kann der Übergang des Hörgerätteils zur Brille unterschiedlich ausgeführt werden. Es ist in einer Ausführungsvariante vorgesehen, dass die Anschlaglippe den Eingang der Adapteröffnung umrandet und im Wesentlichen auf der der Brille zugewandten Seite die Außenabmessungen der Brille und auf der dem Hörgerätteil zugewandten Seite die Außenabmessungen des Hörgerätteils aufweist, sodass sich ein optisch fließender Übergang ergibt. Das Hörgerät ist damit als solches nicht mehr von der Brille optisch zu trennen und auch nicht erkennbar, wenn der Hörgerätträger die Brille mit dem Hörgerät aufhat.

Eine Ausführungsvariante der Hörgerätvorrichtung ist, dass die Hörgerätvorrichtung ein ein- oder mehrteiliges Hörgerätteil, einen Adapter und einen Sicherungsstift umfasst, wobei das Hörgerätteil in einem Endbereich zumindest eine Hörgerätöffnung zum Einbringen des Adapters und eine quer auf eine Längsachse ausgerichtete Bohrung zum Einbringen des Sicherungsstiftes aufweist, und der Adapter eine Adapteröffnung zum Einbringen eines Teils einer Brille und eine Kerbe aufweist, welche Kerbe nach Einbringen des Adapters in das Hörgerätteil mit der Bohrung eine gemeinsame Öffnung ausbildet, in welche der Sicherungsstift form- oder kraftschlüssig eingebracht werden kann. Die Bohrung muss dabei nicht rechtwinkelig auf die Längsachse stehen, sondern kann auch im Wesentlichen quer auf die Längsachse stehen.

In einer bevorzugten Ausführungsvariante ist der Adapter als längliche Hülse ausgeführt. Dabei übersteigt die Längsabmessung des Adapters nicht 150 Prozent des abgemantelten bzw. angepassten Teils des Brillenbügels und seine Querabmessungen entsprechen im Wesentlichen jenen des Mantels des Brillenbügels beziehungsweise des anschließenden Brillenbügelteils, dessen Kontur nicht angepasst ist. Damit kann der Adapter kostengünstig hergestellt werden, sodass für verschiedene Brillenbügel jeweils ein günstiger Adapter bereitgestellt werden kann.

In einer besonders bevorzugten Ausführungsvariante umfasst das Hörgerätteil zumindest einen Teil, welcher ein formbares Bügelende, zum Beispiel einen Ohrhaken, bildet.

Eine weitere Ausführungsvariante ist, dass der Adapter eine Anschlaglippe aufweist, welche den Eingang der Adapteröffnung umrandet und welche im Wesentlichen auf der dem Brillenbügel zugewandten Seite die Außenabmessungen des Brillenbügels und auf der dem Hörgerätteil zugewandten Seite die Außenabmessungen des Hörgerätteils aufweist, sodass sich eine stetige Kontur ergibt. Diese stetige Kontur ergibt optisch einen fließenden Übergang, sodass ein Betrachter das Hörgerät am Träger nicht sofort erkennt, weil er es für einen Teil dessen Brille hält.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Draufsicht auf ein Ohr eines Brillenträgers, einen Teil eines Brillenbügels und eine Schablone zum Anzeichnen
- Fig. 2: eine Ansicht eines Brillenbügels beim Abschneiden, Abmanteln, Auswählen eines Adapters und Einschieben des Brillenbügels in den Adapter
- Fig. 3: eine axonometrische Ansicht des Brillenbügels und Hörgerätteils vor der Verbindung
- Fig. 4: eine axonometrische Ansicht des mit dem Brillenhügel verbundenen Hörgerätteils

### WEGE ZUR AUSFÜHRUNG DER ERFINDUNG

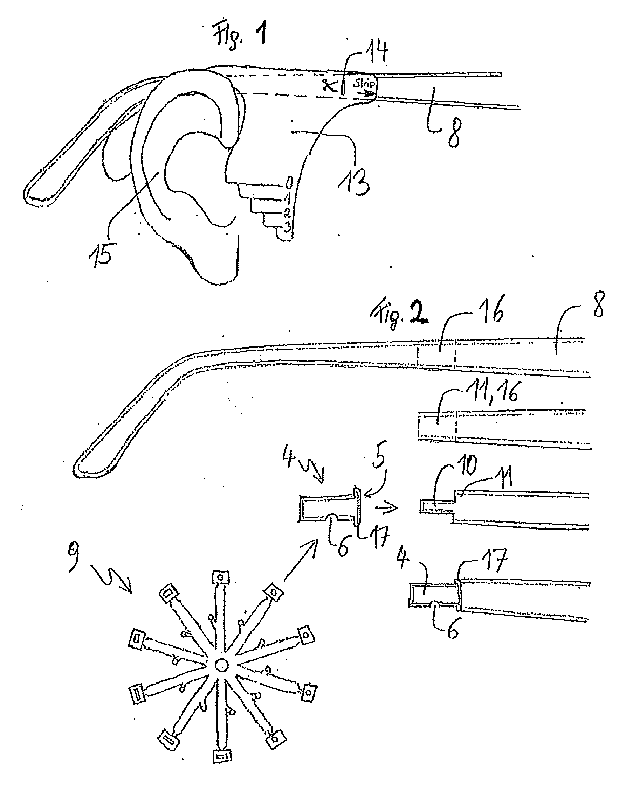

Figur 1 zeigt ein Ohr 15 eines Brillenträgers, einen Teil eines Brillenbügels 8 einer Brille und eine Schablone 13. Dabei kann man sehen, dass die Schablone 13 am Ohr 15 ausgerichtet werden kann, um die perfekte Länge des Teils des Brillenbügels 8 zu ermitteln, der abgeschnitten werden soll, damit ein Adapter 4 einer Hörgerätvorrichtung am Brillenbügel 8 befestigt und mit dem Hörgerätteil 1 verbunden werden kann. Die Schablone 13 weist einen Schlitz 14 auf, mit dessen Hilfe eine Markierung auf dem Brillenbügel 8 vorgenommen werden kann. Aber auch ein Endbereich der Schablone 13 eignet sich dazu, eine Markierung vorzunehmen. In der abgebildeten Ausführungsvariante dient der Schlitz 14 dazu, eine Markierung für das Abschneiden des Brillenbügels zu machen und der Endbereich, um eine Markierung für das Abmanteln zu machen.

Figur 2 zeigt den Ablauf zur Befestigung des Adapters 4 an der Brille. Dabei ist in Figur 2 oben der hintere Teil eines Brillenbügels 8 abgebildet, der am Ohr 15 anliegt. Dieser Teil des Brillenbügels weist bereits die zwei Markierungen auf, die mithilfe der Schablone 13 nach Figur 1 angezeichnet wurden. Dabei ist die eine Markierung für das Abschneiden, die andere für das Abmanteln. Der abzumantelnde Teil 16 ist der Teil zwischen den beiden Markierungen. In Figur 2 ist weiters ein entlang der einen Markierung schon angeschnittener Brillenbügel 8 zu sehen. Darunter ist derselbe Brillenbügel 8 abgemantelt abgebildet, auf den der Adapter 4 aufgeschoben wird. Der Adapter weist eine Adapteröffnung 5 auf, welche parallel zu einer Längsachse des Adapters 4 ausgerichtet ist, und eine Kerbe 6, welche quer zur Längsachse ausgerichtet ist.

Dabei wird ein geeigneter Adapter 4 von einer Adapterhaltevorrichtung 9 ausgewählt, der mehrere verschiedene Adapter 4 mit unterschiedlichen Adapteröffnungen 5 umfasst. Der Vorteil dabei ist, dass sowohl auf die Dicke und Form des Drahtes 10, des Hörgerätteils 1, als auch auf die Dicke und Form der Ummantelung 11 eingegangen werden kann. Es sind allerdings durchaus auch Brillenbügel 8 vorstellbar, bei welchen keine Ummantelung 11 vorhanden ist. In diesem Fall wird, wie auch im Falle eines Brillenbügels 8 mit Ummantelung 11, die Kontur des abgeschnittenen Brillenbügels angepasst und der Adapter 4 auf den angepassten Brillenbügel 8 aufgeschoben. Dies kann geschehen durch Zuschneiden und/oder Feilen für das Einbringen in den Adapter 4. Bei der Verbindung gemäß der untersten Abbildung in Figur 2 gehen der Adapter 4 und der Brillenbügel 8 eine Verbindung ein. Dies geschieht vorzugsweise durch Kleben.

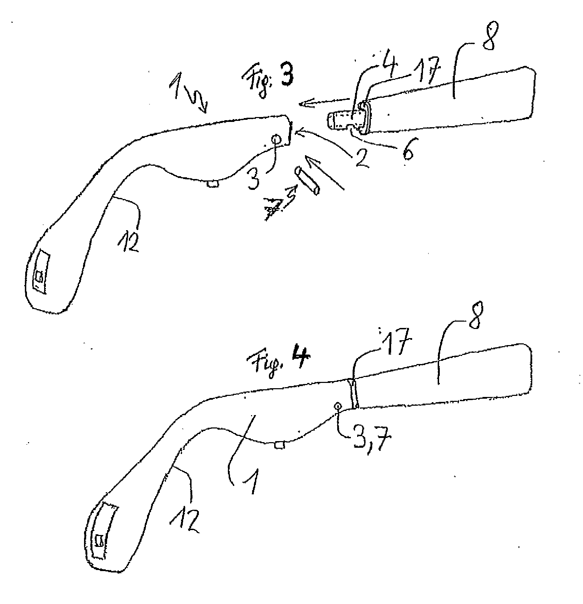

Figur 3 zeigt das Verfahren zur Verbindung des Hörgerätteils 1 mit dem auf den Brillenbügel 8 aufgesteckten Adapter 4, welcher die Kerbe 6 für einen Sicherungsstift 7 aufweist. Das Hörgerätteil 1 weist eine Bohrung 3 und eine Hörgerätöffnung 2 auf. Die Bohrung 3 ist in der Ausführungsvariante in Figur 3 rechtwinkelig auf die Hörgerätöffnung 2 ausgerichtet und geeignet, einen Sicherungsstift 7 aufzunehmen, wobei dieser im Wesentlichen formschlüssig umschlossen wird. Die Hörgerätöffnung 2 befindet sich auf der dem Adapter 4 zugewandten Seite und ist in Größe und Form dazu geeignet, den Adapter 4 aufzunehmen und im Wesentlichen formschlüssig zu umfassen. Bei dem in Figur 3 gezeigten Verfahren zur Verbindung des Hörgerätteils 1 mit dem auf den Brillenbügel 8 aufgesteckten Adapter 4 wird zuerst der Adapter 4 in die Hörgerätöffnung 2 des Hörgerätteils eingebracht.

In dieser Ausführungsvariante weist der Adapter 4 eine Anschlaglippe 17 auf, bis zu welcher das Hörgerätteil 1 überschoben wird.

Danach wird der Sicherungsstift 7 von außen in die Bohrung 3 eingebracht, welche sich an der Stelle der Kerbe 6 des Adapters 4 befindet.

Der Hörgerätteil 1 weist einen Abschnitt auf, welcher als Ohrhaken 12 ausgebildet ist.

Figur 4 zeigt die, nach dem in den Figuren 1 bis 3 dargestellten Verfahren hergestellte, zusammengefügte Verbindung zwischen Hörgerätvorrichtung und Brillenbügel 8. In der abgebildeten Ausführungsvariante bildet der Brillenbügel 8, der Adapter 4 und das Hörgerätteil 1 einen optisch fließenden Übergang.

In Figur 4 ist der Sicherungsstift 7 in die Bohrung 3 und Kerbe 6 bereits eingebracht.

Die stetige Kontur im Bereich der Anschlaglippe 17 ist in Figur 4 dargestellt. Dabei entsprechen die in Figur 4 sichtbaren Außenabmessungen der Anschlaglippe 17 jenen des Brillenbügels 8 und des Hörgerätteils 1 in diesem Bereich.

### BEZUGSZEICHENLISTE

- 1: Hörgerätteil
- 2: Hörgerätöffnung
- 3: Bohrung
- 4: Adapter
- 5: Adapteröffnung
- 6: Kerbe
- 7: Sicherungsstift
- 8: Brillenbügel
- 9: Adapterhaltevorrichtung
- 10: innerer Draht
- 11: äußere Ummantelung
- 12: formbares Bügelende (Ohrhaken)
- 13: Schablone
- 14: Schlitz
- 15: Ohr
- 16: Abzumantelnder Teil
- 17: Anschlaglippe

## Patentansprüche

1. Verfahren zum Verbinden eines Hörgerätteils (1) mit einer darin befindlichen Hörgerätöffnung (2) mit einem Adapter (4), welcher eine Adapteröffnung (5) zur Befestigung des Adapters (4) an einer Brille aufweist, bei welchem Verfahren
- zumindest der Teil des Hörgerätteils (1) mit der darin befindlichen Hörgerätöffnung (2) über zumindest einen Teil des Adapters (4) geschoben wird,
**dadurch gekennzeichnet, dass** das Hörgerätteil (1) eine quer auf eine Längsachse der Hörgerätöffnung (2) stehende Bohrung (3) aufweist und nach dem Überschieben des Hörgerätteils (1) über den Adapter (4) und eine daran vorgesehene Kerbe (6), ein Sicherungsstift (7) in die Bohrung (3) und die Kerbe (6) eingebracht wird.

2. Verfahren nach Anspruch 1, **dadurch gekennzeichnet, dass** zumindest ein Teil eines Brillenbügels (8) einer Brille in die Adapteröffnung (5) eingebracht wird.

3. Verfahren nach Anspruch 2, **dadurch gekennzeichnet, dass** der Adapter (4) aus mehreren unterschiedlichen Adaptern (4), welche von einer gemeinsamen Adapterhaltevorrichtung (9) gehalten werden, passend zu dem Hörgerätteil (1) und/oder zum Brillenbügel (8) ausgewählt wird.

4. Verfahren nach Anspruch 3, **dadurch gekennzeichnet, dass** die Adapterhaltevorrichtung (9) mit den Adaptern (4) ein Gussformteil mit Sollbruchstellen zum Ablösen der Adapter (4) umfasst.

5. Verfahren nach einem der Ansprüche 2 bis 4, **dadurch gekennzeichnet, dass** der Brillenbügel (8) abgeschnitten, die Kontur des Brillenbügels angepasst und der Adapter (4) auf den angepassten Brillenbügel (8) aufgeschoben wird.

6. Verfahren nach einem der Ansprüche 2 bis 5, **dadurch gekennzeichnet, dass** der Brillenbügel (8) einem inneren Draht (10) und eine äußere Ummantelung (11) umfasst und der Brillenbügel (8) abgeschnitten, ein Teil der Ummantelung (11) entfernt und der Adapter (4) auf den Draht (10) aufgeschoben wird.

7. Verfahren nach einem der Ansprüche 2 bis 6, **dadurch gekennzeichnet, dass** der Hörgerätteil (1) ein formbares Bügelende (12) bildet und es folgende zusätzliche Schritte vor dem Abschneiden des Brillenbügels (8) umfasst:
- Die Brille wird von einem Brillenträger aufgesetzt,
- Eine Schablone (13), welche zumindest mit einem Schlitz (14) versehen ist, wird an einem Teil eines Ohrs (15) des Brillenträgers angebracht,
- Der Brillenbügel (8) wird an der Stelle des zumindest einen Schlitzes (14) und/oder einem Endbereich der Schablone (13) für das Abmanteln und/oder Abschneiden markiert.

8. Verfahren nach einem der Ansprüche 1 bis 7, **dadurch gekennzeichnet, dass** der Adapter (4) eine Anschlaglippe (17) aufweist, welche den Eingang der Adapteröffnung (5) umrandet, und das Hörgerätteil (1) über den Adapter (4) übergeschoben wird bis zum Anschlag an der Anschlaglippe (17).

9. Hörgerätvorrichtung für das Verfahren nach einem der Ansprüche 1 bis 8, **dadurch gekennzeichnet, dass** die Hörgerätvorrichtung ein ein- oder mehrteiliges Hörgerätteil (1), einen Adapter (4) und einen Sicherungsstift (7) umfasst, wobei das Hörgerätteil (1) in einem Endbereich zumindest eine Hörgerätöffnung (2) zum Einbringen des Adapters (4) und eine quer auf eine Längsachse ausgerichtete Bohrung (3) zum Einbringen des Sicherungsstiftes (7) aufweist, und der Adapter (4) eine Adapteröffnung (5) zum Einbringen eines Teils einer Brille und eine Kerbe (6) aufweist, welche Kerbe (6) nach Einbringen des Adapters (4) in das Hörgerätteil (1) mit der Bohrung (3) eine gemeinsame Öffnung ausbildet, in welche der Sicherungsstift (7) form- oder kraftschlüssig eingebracht werden kann.

10. Vorrichtung nach Anspruch 9, **dadurch gekennzeichnet, dass** das Hörgerätteil (1) zumindest einen Teil umfasst, welcher ein formbares Bügelende bildet.

11. Vorrichtung nach einem der Ansprüche 9 bis 10 mit Brillenbügel (8), **dadurch gekennzeichnet, dass** der Adapter (4) eine Anschlaglippe (17) aufweist, welche den Eingang der Adapteröffnung (5) umrandet und welche im Wesentlichen auf der dem Brillenbügel (8) zugewandten Seite die Außenabmessungen des Brillenbügels (8) und auf der dem Hörgerätteil (1) zugewandten Seite die Außenabmessungen des Hörgerätteils (1) aufweist, sodass sich eine stetige Kontur ergibt.
